# EUROPEAN PATENT SPECIFICATION

(11) **EP 1 221 260 B1**
(45) Date of publication and mention of the grant of the patent: **26.03.2003**
(21) Application number: 00967356.7
(22) Date of filing: 07.08.2000
(51) Int. Cl.: H04N 7/16

(54) **TRANSMITTING VIDEO INFORMATION WITH LOCALITY SPECIFIC INFORMATION**
VIDEONACHRICHTENÜBERTRAGUNG MIT ORTSSPEZIFISCHEN INFORMATIONEN
TRANSMISSION D'INFORMATIONS VIDEO ASSORTIES D'INFORMATIONS CONCERNANT SPECIFIQUEMENT UNE LOCALITE

(30) Priority: 27.09.1999 US 405576
(43) Date of publication of application: 10.07.2002
(73) Proprietor: INTEL CORPORATION, Santa Clara, CA 95052 (US)
(72) Inventor: CASSEZZA, Jason, T., Aloha, OR 97007 (US)
(74) Representative: Wombwell, Francis
(86) International application number: US0040578
(87) International publication number: WO01024525

(56) References cited:
- WO-A-97/12486
- US-A- 5 937 329

## Description

### Background

This invention relates generally to processor-based systems for transmitting and receiving video information. This invention relates generally to video transmissions, such as interactive broadcasting for example, where television programming is broadcast together with web content.

Video transmissions may include multicasting and broadcasts. Interactive broadcasting allows a multi-dimensional video presentation. One example of interactive broadcasting involves television programming and accompanying web content together with additional services. Advantageously, the web content is downloaded by the broadcaster together with the television programming so that the two may be used together on the user's receiver. Typically the receiver is a computer with a monitor or a set top computer (with a television) adapted to receive television signals.

The web content may be transmitted together with television programming by a service provider called a broadcast encoder. Basically, the broadcast encoder is a server which may exist at a broadcasting station or a bandwidth provider. The broadcast encoder may receive data and information from content providers and broadcast the data on one or more transports.

Currently advertisers may advertise on national media, such as network television, broadcasting their product information to a number of localities. In some cases, advertisers may provide a toll free nationwide telephone number or an Internet e-mail address to allow consumers to make contact with the advertiser. It is generally not feasible to provide local contact information for each of a large number of localities across a given broadcast region such as an entire country. One reason for this is because the contact information would take up too much space on a display screen.

Thus, advertisers are limited in their ability to provide local contact information on a large scale basis. While local television broadcasts may include such information in some cases, it is generally prohibitive for a national entity to provide local contacts for all the localities that are serviced by the entity.

As a result, the ability of consumers to act promptly in response to the advertising message may be adversely affected. In addition, consumers may have more trouble following up on the information they receive from broadcast sources.

Thus, there is a continuing need for better ways to enable consumers to link to information they receive from video content providers.

Further reference is made to WO-A-97/12486.

### Summary

In accordance with one aspect, a method of transmitting video content to a plurality of receivers in a plurality of localities includes transmitting video information. Local contact information together with a locality identifier may also be transmitted for a plurality of localities. The locality identifier is such that a plurality of receivers in a plurality of localities can automatically retrieve the appropriate local contact information.

Other aspects are set forth in the accompanying detailed description and independent claims 1, 7, 12, 15, 17 and 19.

### Brief Description of the Drawings

Fig. 1 is a schematic depiction of a video transmission system in accordance with one embodiment of the present invention;
Fig. 2 is a flow chart for software which is resident on a server in one embodiment of the present invention;
Fig. 3 is a flow chart for software which may be resident on a client in one embodiment of the present invention;
Fig. 4 is a flow chart for client set-up software in accordance with one embodiment of the invention; and
Fig. 5 is a schematic depiction of hardware for implementing a client shown in Fig. 1 in accordance with one embodiment of the present invention.

### Detailed Description

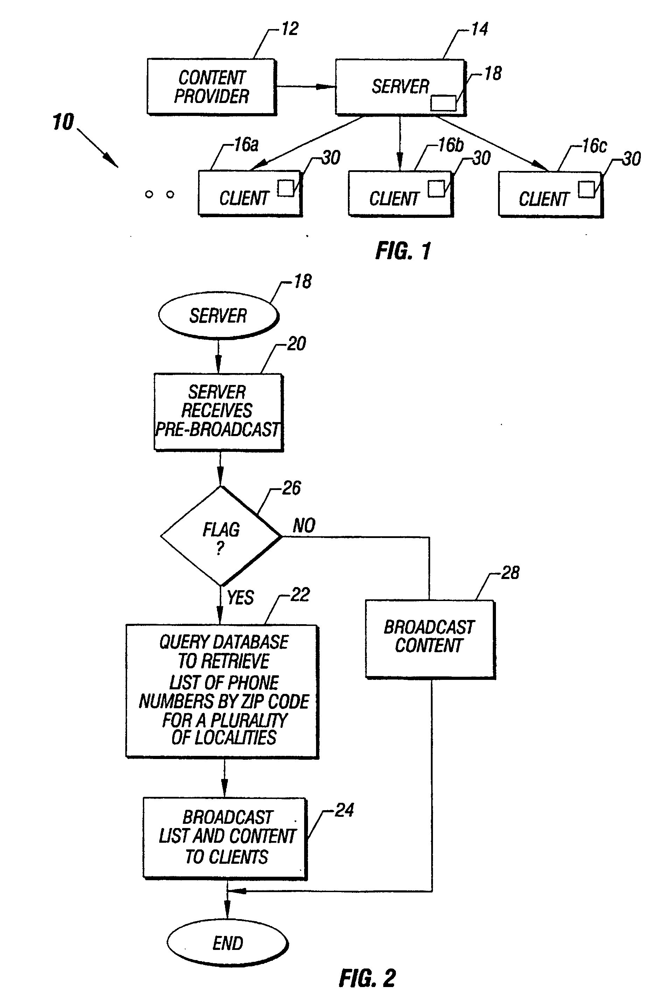

A video distribution system 10, shown in Fig. 1, may include a server 14 which transmits video information to a plurality of clients 16a, 16b and 16c. The server 14 may receive video information or content to be broadcast from a content provider 12. The content may be, for example, television programming which may be broadcast through an airwave broadcast as one example.

Advantageously, the server 14 implements an interactive video system wherein a content provider may provide programming for transmission to clients. The clients may receive web content, for example in the form of web pages, which may be associated with the content from the content provider. For example, in connection with airwave broadcasts, the web content may be transmitted in the vertical blanking interval (VBI) associated with conventional airwave television broadcasts.

In connection with other means of video distribution, such as satellite transmissions and cable systems, the available bandwidth may be sufficiently large that the web content may be provided at the same time as the content from the programming provider. Thus, the user may link the web content with the programming. In the course of viewing a given video transmission, the user may access the web content which may be stored on a client 16.

For example, with a television program concerning animals, the user may link to associated web pages which may be broadcast simultaneously. Those web pages may provide web content about particular animals. As a result, each user of a client can customize the information which the user accesses.

The server 14 may store software 18, which is illustrated in Fig. 2. The server software 18 may begin by receiving a pre-broadcast from a content provider 12 (block 20). The information from the content provider may be scanned for indicia such as a flag to indicate that web content is to be transmitted with the programming. Thus, in one embodiment of the present invention, a check at diamond 26 determines whether or not web content should be sent. In this case, the web content may be a directory of local telephone numbers or other contact information for a plurality of localities. If a flag or other indicia is provided, the server 14 may query a database to retrieve a list of phone numbers linked by zip codes for a plurality of different localities, in one embodiment of the invention.

Thus, the server may access the database over a separate transport in one embodiment of the invention. That source of information, as one example, may be accessible over the Internet. Alternatively, the information may be provided directly by the content provider 12.

The database may include a list of contact information for a plurality of localities such as phone numbers that are within the transmission receiving area. The local contact information for each locality is identified by a locality identifier such as a zip code number. Thus, for each locality associated with a given zip code within the video transmission region, the associated local contact telephone number for that locality may be identified through the zip code information.

If a flag or other indicia is identified, a database is queried to retrieve a list of phone numbers by zip code for a plurality of localities, as indicated in block 22, in one embodiment of the present invention. Again, the database may be accessed from the content provider or through a separate medium such as the Internet as examples. In still other alternatives, the server 14 may have a database available to the server which contains such information or the server may be linked to a networked computer which may have such information.

The list of phone numbers and the programming from the content provider 12 may then be broadcast together to a plurality of clients in a variety of different localities (blocks 24, 28). Similarly, if no flag or other indicia is identified, the programming alone may be broadcast by the server 14. A variety of different broadcast media may be utilized including airwave broadcasts, satellite broadcasts, cable broadcasts and networked broadcasts.

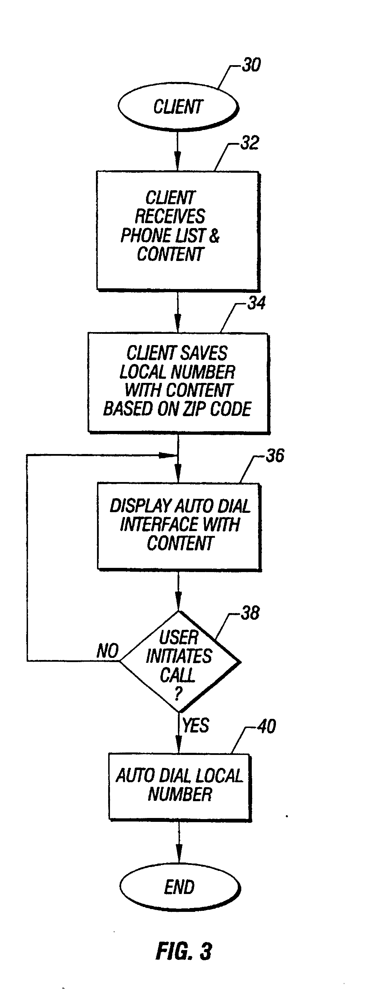

Referring now to Fig. 3, the software 30 on a client 16 begins by receiving the programming content and the phone list information from the server 14, as indicated in block 32. The client 16 identifies its local content information using the zip code information provided by the server. Thus, the information provided by the content provider is scanned to identify the corresponding zip code and that zip code is utilized to obtain the local contact number from the larger database. The local contact number may then be saved (block 34). The client need not save the entire database of telephone numbers but instead only saves the local contact number for its particular locality.

Referring next to block 36, a graphical user interface may be displayed in association with the programming for those users who access the web content. In response to a graphical user interface, the user may automatically dial the local contact number which was identified previously, as indicated in block 36. The user may initiate the call by clicking on an appropriate graphical user interface icon using a mouse or a remote control unit as examples. When a request for a user initiated call is identified, as indicated in diamond 38, the local contact number may be dialed automatically (block 40).

In general, the programming provided to the client may suggest that the user may access the web content. The user then accesses the web content as provided for by the interactive broadcast system. When the user clicks on the "auto dial" icon, an automatic dialer dials the local contact number which was parsed from the database of zip codes and associated phone contacts.

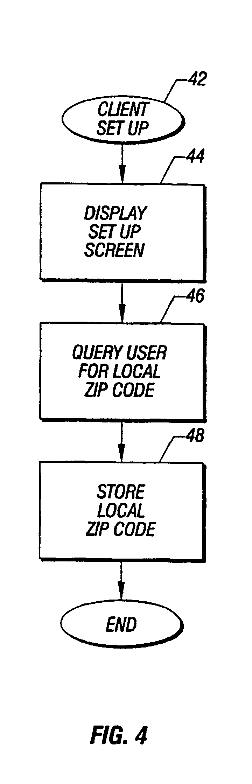

Referring to Fig. 4, the software 42 for setting up the client to identify the appropriate locality identifier from the local contact database begins by displaying a set-up screen for a graphical user interface, as indicated in block 44. The user is prompted to input his or her local zip code number or other locality identifier as indicated in block 46. The local zip code number is stored as indicated in block 48 in association with software 30, which parses the local contact information from the database using a locality identifier such as a zip code.

In this way, the local client may accept only the local contact information which the local user needs. Each local client can easily obtain its local contact information. The client's resources, such as its memory, are not taxed by handling a very large database of contact information for localities which would be of no interest to a user of a particular client. Thus, an efficient system may be implemented which enables local consumers to obtain the information they need without undue burden.

In one example, the content provider 12 may provide programming that includes a television commercial. The server 14 may broadcast the commercial together with the local contact database through another transport medium such as the vertical blanking interval, in one example. Each local client 16 may then parse the local contact information from the database using a pre-established locality identifier stored on the client that matches one locality identifier broadcast in association with a particular local contact number. If the user wants additional information or wants to make a purchase, the user can access the local contact number. For example, a conventional automatic dialer may be utilized to auto dial the number extracted from the overall database and stored on a particular client.

Examples of other locality identifiers may include city name identifiers, area codes, local exchange numbers and county names, as additional examples. Examples of other local content information includes addresses, names, and electronic mail addresses.

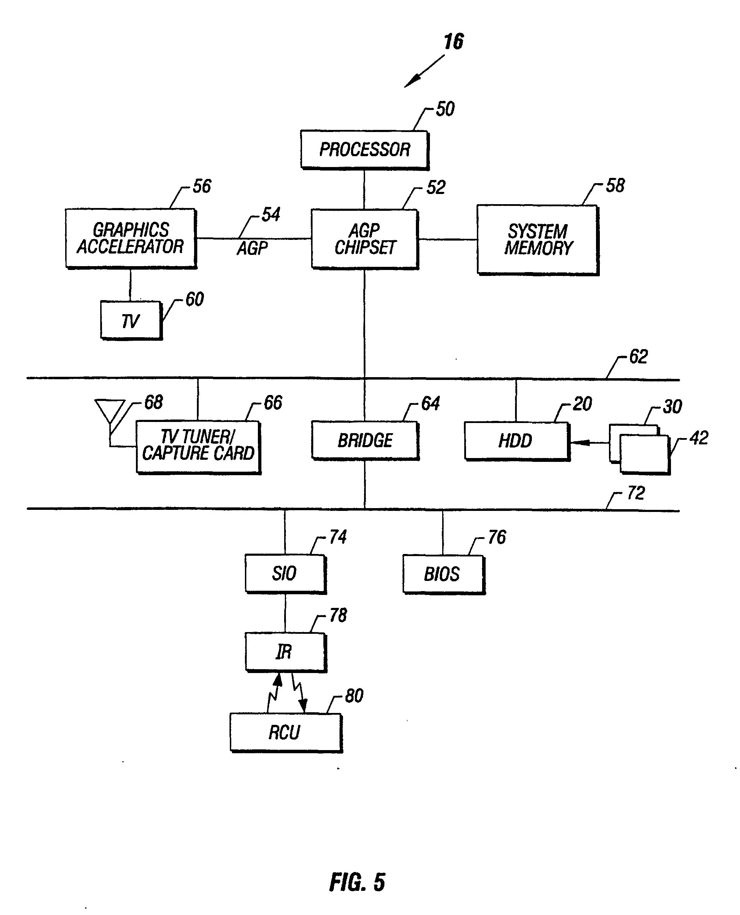

Referring next to Fig. 5, a hardware implementation for the embodiment shown in Fig. 1 includes a processor 50. In one embodiment, the processor may be coupled to an accelerated graphics port (AGP) (see Accelerated Graphics Port Interface Specification, Rev. 1.0, published July 31, 1996 by Intel Corporation, Santa Clara, California) chipset 52 for implementing an accelerated graphics port embodiment. The chipset 52 communicates with the AGP port 54 and the graphics accelerator 56. The television 60 may be coupled to the video output of the graphics accelerator 56. The chipset 52 accommodates the system memory 58.

The chipset 52 is also coupled to a bus 62. The bus 62 coupled a television tuner/capture card 66 which is coupled to an antenna 68 or other video input port, such as a cable input port, a satellite receiver/antenna or the like. The television tuner/capture card selects a desired television channel and also performs a video capture function. One exemplary video capture card is the ISVR-III Video Capture Card available from Intel Corporation.

The bus 62 is also coupled to a bridge 64 which may couple a storage device such as a hard disk drive 20 or a flash memory. The drive 20 may store the software 30 and 42. The bridge 64 is also coupled to another bus 72. The bus 72 may in turn be coupled to a serial input/output (SIO) device 74. The device 74 is coupled to an infrared interface 78. Also connected to the bus 72 is a basic input/output system (BIOS) 76.

The IR interface 78 may communicate using infrared signals with an IR interface on the RCU 80. Any of a variety of protocols may be utilized for implementing IR communications. In addition, other forms of airwave communications may be utilized as well.

While the present invention has been described with respect to a limited number of embodiments, those skilled in the art will appreciate numerous modifications and variations therefrom. It is intended that the appended claims cover all such modifications and variations as fall within the scope of this present invention.

## Claims

1. A method of transmitting video content to a plurality of receivers in a plurality of localities comprising:
transmitting video information; and
transmitting local contact information together with a locality identifier for a plurality of localities, such that a plurality of receivers in a plurality of localities can automatically retrieve the appropriate local contact information.

2. The method of claim 1 wherein transmitting video information includes transmitting television programming.

3. The method of claim 1 wherein transmitting video information further includes transmitting programming together with web content.

4. The method of claim 1 wherein transmitting local contact information includes transmitting a database containing a plurality of local telephone numbers for a plurality of different localities.

5. The method of claim 4 wherein transmitting local contact information includes transmitting a plurality of local telephone numbers associated with a plurality of local zip codes.

6. The method of claim 1 wherein transmitting video information includes transmitting an indicator to indicate that local contact information is being transmitted with said video information.

7. An article comprising a medium for storing instructions that cause a processor-based system to:
transmit video information; and
transmit local contact information together with a locality identifier for a plurality of localities, such that a plurality of receivers in a plurality of localities can automatically retrieve the appropriate locality contact information.

8. The article of claim 7 further storing instructions that cause a processor-based system to transmit television programming.

9. The article of claim 7 further storing instructions that cause a processor-based system to transmit a database containing a plurality of local telephone numbers for plurality of different localities.

10. The article of claim 9 further storing instructions that cause a processor-based system to transmit a plurality of local telephone numbers associated with a plurality of local zip codes.

11. The article of claim 7 further storing instructions that cause a processor-based system to transmit an indicator to indicate that local contact information is being transmitted with said video information.

12. A method of receiving video content transmitted from a content provider comprising:
receiving video information;
receiving local contact information together with a locality identifier for a plurality of localities; and
using a locality identifier to identify the local contact information for a particular locality.

13. The method of claim 12 further including storing the local contact information for a particular locality.

14. The method of claim 13 including storing only the local contact information for a particular locality and not storing any of the local contact information for other localities.

15. An article comprising a medium for storing instructions that cause a processor-based system to:
receive video information;
receive local contact information together with a locality identifier for a plurality of localities; and
use a locality identifier to identify the local contact information for a particular locality.

16. The article of claim 15 further storing instructions that cause a processor-based system to receive a local telephone number and automatically dial said local telephone number.

17. A processor-based system comprising:
a processor;
storage coupled to said processor; and
software stored on said storage to compare a locality identifier associated with said system to a plurality of locality identifiers contained in a database received by said system, the database being received together with video information.

18. The system of claim 17 wherein said software is adapted to select local contact information associated with a locality identifier by comparing the locality identifiers received with said local contact information to a pre-defined locality identifier associated with said system.

19. A processor-based system comprising:
a processor;
storage coupled to said processor; and
software stored on said storage to transmit video information together with a database containing a plurality of locality identifiers for a plurality of localities each associated with local contact information.

20. The system of claim 19 wherein said software detects an indicator and based on said indicator accesses said database.

## Patentansprüche

1. Ein Verfahren zum Übermitteln von Videoinhalten an eine Mehrzahl von Empfängern an einer Mehrzahl von Orten, umfassend:
Übermitteln von Videoinformationen; und
Übermitteln von lokalen Kontaktinformationen zusammen mit jeweils einem Ortsidentifizierer für eine Mehrzahl von Orten, so daß mehrere Empfänger an einer Mehrzahl von Orten automatisch die richtigen lokalen Kontaktinformationen wiedergewinnen können.

2. Das Verfahren nach Anspruch 1, wobei das Übermitteln von Videoinformationen das Übermitteln von Fernsehprogrammen einschließt.

3. Das Verfahren nach Anspruch 1, wobei das Übermitteln von Videoinformationen ferner das Übermitteln von Programmen zusammen mit Web-Inhalten einschließt.

4. Das Verfahren nach Anspruch 1, wobei das Übermitteln von lokalen Kontaktinformationen das Übermitteln einer Datenbank einschließt, die eine Mehrzahl lokaler Telefonnummern für eine Mehrzahl von verschiedenen Orten enthält.

5. Das Verfahren nach Anspruch 4, wobei das Übermitteln von lokalen Kontaktinformationen das Übermitteln einer Mehrzahl lokaler Telefonnummern, die einer Mehrzahl lokaler Postleitzahlen zugeordnet sind, einschließt.

6. Das Verfahren nach Anspruch 1, wobei das Übermitteln von Videoinformationen das Übermitteln eines Indikators einschließt, um anzuzeigen, daß lokale Kontaktinformationen mit den Videoinformationen übermittelt werden.

7. Ein Gegenstand, der ein Medium zum Speichern von Befehlen aufweist, wobei die Befehle ein prozessor-basiertes System veranlassen,
Videoinformationen zu übermitteln; und
lokale Kontaktinformationen zusammen mit jeweils einem Ortsidentifizierer für eine Mehrzahl von Orten zu übermitteln, so daß mehrere Empfänger an einer Mehrzahl von Orten automatisch die richtigen lokalen Kontaktfinformationen wiedergewinnen können.

8. Der Gegenstand nach Anspruch 7, ferner speichernd Befehle, die ein prozessor-basiertes System veranlassen, Fernsehprogramme zu übermitteln.

9. Der Gegenstand nach Anspruch 7, ferner speichernd Befehle, die ein prozessor-basiertes System veranlassen, eine Datenbank zu übermitteln, die eine Mehrzahl lokaler Telefonnummern für eine Mehrzahl verschiedener Orte enthält.

10. Der Gegenstand nach Anspruch 9, ferner speichernd Befehle, die ein prozessor-basiertes System veranlassen, eine Mehrzahl lokaler Telefonnummern zu übermitteln, die einer Mehrzahl lokaler Postleitzahlen zugeordnet sind.

11. Der Gegenstand nach Anspruch 7, ferner speichernd Befehle, die ein prozessor-basiertes System veranlassen, einen Indikator zu übermitteln, um anzuzeigen, daß lokale Kontaktinformationen mit den Videoinformationen übermittelt werden.

12. Ein Verfahren zum Empfangen von Videoinhalten, die von einem Inhalteanbieter übermittelt worden sind, umfassend:
Empfangen von Videoinformationen;
Empfangen lokaler Kontaktinformationen zusammen mit jeweils einem Ortsidentifizierer für eine Mehrzahl von Orten; und
Verwenden eines Ortsidentifizierers, um die lokalen Kontaktinformationen für einen bestimmmten Ort zu identifizieren.

13. Das Verfahren nach Anspruch 12, ferner einschließend das Speichern der lokalen Kontaktinformationen für einen bestimmten Ort.

14. Das Verfahren nach Anspruch 13, einschließend das Speichern ausschließlich der Kontaktinformationen für einen bestimmten Ort und nicht irgendwelcher lokaler Kontaktinformationen für andere Orte.

15. Ein Gegenstand, der ein Medium zu Speichern von Befehlen aufweist, wobei die Befehle ein prozessor-basiertes System veranlassen,
Videoinformationen zu empfangen;
lokale Kontaktinformationen zusammen mit jweils einem Ortsidentifizierer für eine Mehrzahl von Orten zu empfangen; und
einen Ortsidentifizierer zu verwenden, um die lokalen Kontaktinformationen für einen bestimmten Ort zu identifizieren.

16. Der Gegenstand nach Anspruch 15, ferner speichernd Befehle, die ein prozessor-basiertes System veranlassen, eine lokale Telefonnummer zu empfangen und automatisch die lokale Telefonnummer zu wählen.

17. Ein prozessor-basiertes System, aufweisend:
einen Prozessor;
einen mit dem Prozessor gekoppelten Speicher; und
in dem Speicher gespeicherte Software zum Vergleichen eines dem System zugeordneten Ortsidentifizierers mit einer Mehrzahl von Ortsidentifizierern, die in einer von dem System empfangenen Datenbank enthalten sind, wobei die Datenbank zusammen mit Videoinformationen empfangen wird.

18. Das System nach Anspruch 17, wobei die Software so ausgebildet ist, daß sie einem Ortsidentifizierer zugeordnete lokale Kontaktinformationen auswählt, indem sie die mit den lokalen Kontaktinformationen empfangenen Ortsidentifizierer mit einem dem System zugeordneten zuvor definierten Ortsidentifizierer vergleicht.

19. Ein prozessor-basiertes System, aufweisend:
einen Prozessor;
einen mit dem Prozessor gekoppelten Speicher; und
in dem Speicher gespeicherte Software zum Übermitteln von Videoinformationen zusammen mit einer Datenbank, die eine Mehrzahl von Ortsidentifizierern für eine Mehrzahl von Orten enthält, denen jeweils lokale Kontaktinformationen zugeordnet sind.

20. Das System nach Anspruch 19, wobei die Software einen Indikator erfaßt und auf der Grundlage des Indikators auf die Datenbank zugreift.

## Revendications

1. Procédé de transmission d'un contenu vidéo vers une pluralité de récepteurs dans une pluralité de localités, comprenant :
- la transmission d'une information vidéo ; et
- la transmission d'une information de contact local en conjonction avec un identificateur de localité pour une pluralité de localités de telle façon qu'une pluralité de récepteurs d'une pluralité de localités puissent extraire de façon automatique l'information adaptée de contact local.

2. Procédé selon la revendication 1, selon lequel la transmission de l'information vidéo comprend la transmission d'une programmation de télévision.

3. Procédé selon la revendication 1, selon lequel la transmission d'une information vidéo comprend, de plus, la transmission d'une programmation en conjonction avec un contenu de toile mondiale.

4. Procédé selon la revendication 1, selon lequel la transmission d'une information de contact local comprend la transmission d'une base de données contenant une pluralité de numéros de téléphone locaux pour une pluralité de différentes localités.

5. Procédé selon la revendication 4, selon lequel la transmission d'une information de contact local comprend la transmission d'une pluralité de numéros de téléphone locaux associés à une pluralité de codes ZIP locaux.

6. Procédé selon la revendication 1, selon lequel la transmission d'une information vidéo comprend la transmission d'un indicateur pour indiquer que l'information de contact local est transmise avec ladite information vidéo.

7. Système comprenant un support de stockage d'instructions pour amener un système à base de processeur à :
- transmettre une information vidéo ; et
- transmettre une information de contact local en conjonction avec un identificateur de localité pour une pluralité de localités de telle façon qu'une pluralité de récepteurs d'une pluralité de localités puissent extraire, de façon automatique, l'information adaptée de contact local.

8. Système selon la revendication 7, stockant, de plus, des instructions amenant un système à base de processeur à transmettre une programmation de télévision.

9. Système selon la revendication 7, stockant, de plus, des instructions amenant un système à base de processeur à transmettre une base de données contenant une pluralité de numéros de téléphones locaux pour une pluralité de différentes localités.

10. Système selon la revendication 9, stockant, de plus, des instructions amenant un système à base de processeur à transmettre une pluralité de numéros de téléphones locaux associés à une pluralité de codes ZIP locaux.

11. Système selon la revendication 7, stockant, de plus, des instructions amenant un système à base de processeur à transmettre un indicateur indiquant que l'information de contact local est transmise avec ladite information vidéo.

12. Procédé de réception d'un contenu vidéo transmis à partir d'un fournisseur de contenu, comprenant :
- la réception d'une information vidéo ;
- la réception d'une information de contact local en conjonction avec un identificateur de localité pour une pluralité de localités ; et
- l'utilisation d'un identificateur de localité pour identifier l'information de contact local pour une localité particulière.

13. Procédé selon la revendication 12, comprenant, de plus, le stockage de l'information de contact local pour une localité particulière.

14. Procédé selon la revendication 13, comprenant le stockage seulement de l'information de contact local pour une localité particulière et non pas le stockage d'une quelconque information de contact local pour d'autres localités.

15. Système comprenant un support pour le stockage d'instructions amenant un système à base de processeur à :
- recevoir une information vidéo ;
- recevoir une information de contact local en conjonction avec un identificateur de localité pour une pluralité de localités ; et
- utiliser un identificateur de localité pour identifier l'information de contact local pour une localité particulière.

16. Système selon la revendication 15, stockant, de plus, des instructions amenant un système à base de processeur à recevoir un numéro de téléphone local et à composer, de façon automatique, ledit numéro de téléphone local.

17. Système à base de processeur, comprenant :
- un processeur ;
- un stockage couplé audit processeur ; et
- un logiciel stocké sur ledit stockage pour comparer un identificateur de localité associé audit système avec une pluralité d'identificateurs de localités contenus dans une base de données reçue par ledit système, la base de données étant reçue en conjonction avec une information vidéo.

18. Système selon la revendication 17, dans lequel ledit logiciel est prévu pour sélectionner une information de contact local associée à un identificateur de localité en comparant les identificateurs de localité reçus avec ladite information de contact local avec un identificateur prédéfini de localité associé audit système.

19. Système à base de processeur, comprenant :
- un processeur ;
- un stockage couplé audit processeur ; et
- un logiciel stocké sur ledit stockage pour transmettre une information vidéo en conjonction avec une base de données contenant une pluralité d'identificateurs de localités pour une pluralité de localités associées chacune à l'information de contact local.

20. Système selon la revendication 19, dans lequel ledit logiciel détecte un indicateur et sur la base dudit indicateur, accède à ladite base de données.
